# EUROPEAN PATENT SPECIFICATION

(11) **EP 3 899 100 B1**
(45) Date of publication and mention of the grant of the patent: **25.01.2023**
(21) Application number: 19835784.0
(22) Date of filing: 17.12.2019
(51) Int. Cl.: C25B 13/04, C25B 1/04, C25B 9/05, C25B 9/23

(54) **WATER ELECTROLYZERS**
WASSERELEKTROLYSATOREN
ÉLECTROLYSEURS D'EAU

(30) Priority: 19.12.2018 US 201862781707 P
(43) Date of publication of application: 27.10.2021
(73) Proprietor: 3M Innovative Properties Company, Saint Paul, Minnesota 55133-3427 (US)
(72) Inventor: PARK, Jiyoung, deceased (US); LEWINSKI, Krzysztof A., Saint Paul, Minnesota 55133-3427 (US)
(74) Representative: Mathys & Squire
(86) International application number: PCT/IB2019/060943
(87) International publication number: WO 2020/128849

(56) References cited:
- EP-A1- 2 704 239
- WO-A1-2018/185617
- US-A- 5 342 494
- US-A1- 2007 072 036

## Description

### Background

Water electrolyzers are common electrochemical devices for producing ultra-pure (e.g., typically, at least 99.9% pure) hydrogen from pure water. In the case of proton exchange membrane (PEM) based water electrolyzers, hydrogen can be obtained at high pressure. These electrolyzers often contain membrane electrode assemblies (MEAs) similar to proton exchange membrane electrode assemblies for fuel cells. PEM based water electrolyzers, however, produce hydrogen at the cathode via a hydrogen evolution reaction (HER) and oxygen at the anode via an oxygen evolution reaction (OER). The designation of the electrodes as anode or cathode in an electrochemical device follows the IUPAC convention that the anode is the electrode at which the predominant reaction is oxidation (e.g., the H₂ oxidation electrode for a fuel cell, or the water oxidation/O₂ evolution reaction electrode for a water electrolyzer).

Higher operating pressures on the water electrolyzer cathode (e.g., even approaching 5 MPa) create a situation known in the field as hydrogen crossover, where the hydrogen gas (H₂) crosses from the cathode where it is produced through the PEM back to the anode. This situation creates both an efficiency loss, and in some situations an undesired amount of H₂ mixing with the anode gas (O₂) (e.g., when it exceeds 4 vol. %, which is about the lower explosive limit (LEL) for H₂/O₂ mixture).

There is a desire to mitigate this crossover of hydrogen to the anode.

### Summary

In one aspect, the present disclosure describes a water electrolyzer comprising:
a membrane having first and second opposed major surfaces, a thickness extending between the first and second major surfaces;
a cathode comprising a first catalyst on the first major surface of the membrane; and
an anode comprising a second catalyst on the second major surface of the membrane,

wherein the membrane, if planar, has a length direction, an average length, a width direction, an average width, a thickness direction, and an average thickness,
wherein the average length and the average width are each greater than the average thickness,
wherein the average width is no greater than the average length,
wherein the average thickness is defined between first and second major surfaces of the membrane,
wherein the average length, the average width, and the average thickness define a membrane volume,
wherein the length direction, the width direction, and the thickness direction are each perpendicular to each other,
wherein the membrane volume comprises at least one of metallic Pt or Pt oxide,
wherein the membrane volume comprises at least 5 (in some embodiments, at least 6, 7, 8, 9, 10, 25, 50, 75, 100, 500, or even at least 1000) alternating first and second regions across at least one plane in the membrane,
wherein the first region has a first concentration within a 100 micrometer³ volume collectively of metallic Pt and Pt oxide that is at least 0.1 (in some embodiments, at least 0.5, 1, 5, 10, 25, 50, 75, 100, 250, 500, 1000, 2500, or even at least 5000) microgram/cm³,
wherein the second region has a second concentration within a 100 micrometer³ volume collectively of metallic Pt and Pt oxide that is not greater than 0.01 (in some embodiments, not greater than 0.005, 0.0025, 0.001, 0.0005, 0.00025, 0.0001, 0.00005, 0.000025, 0.00001, or even zero) microgram/cm³, and
wherein the first concentration is at least 10 (in some embodiments, at least 25, 50, 100, 500, or even at least 1000; in some embodiments, in a range from 10 to 1000, 25 to 500, or even 50 to 100) times greater than the second concentration.

In some embodiments, the alternating first and second regions are across at least one line (in some embodiments, at least two, three, four, five, or more lines) in the length direction. In some embodiments, the alternating first and second regions are across at least one line (in some embodiments, at least two, three, four, five, or more lines) in the width direction. In some embodiments, the alternating first and second regions are across at least one line (in some embodiments, at least two, three, four, five, or more lines) in the thickness direction. In some embodiments, the alternating first and second regions are across at least one plane (in some embodiments, at least two, three, four, five, or more planes) parallel with the length and width directions. In some embodiments, the alternating first and second regions are across at least one plane (in some embodiments, at least two, three, four, five, or more planes) parallel with the length and thickness directions. In some embodiments, the alternating first and second regions are across at least one plane (in some embodiments, at least two, three, four, five, or more planes) parallel with the width and thickness directions. In some embodiments, the alternating first and second regions are across at least one volume (in some embodiments, at least two, three, four, five, or more volumes) within the length, width, and thickness directions.

In another aspect, the present disclosure provides a method of generating hydrogen and oxygen from water, the method comprising:
providing a water electrolyzer described herein;
providing water in contact with the anode; and
providing an electrical potential difference across the water electrolyzer with sufficient current to convert at least a portion of the water to hydrogen and oxygen on the cathode and anode, respectively.

### Brief Description of the Drawings

FIG. 1 is a schematic of an exemplary prior art water electrolyzer.
FIG. 2 is a perspective view of an exemplary membrane described herein.
FIG. 2A is an expanded view of a portion of FIG. 2.
FIG. 3 is a perspective view of an exemplary membrane described herein.
FIG. 3A is an expanded view of a portion of FIG. 3.
FIG. 4 is a perspective view of an exemplary membrane described herein.
FIG. 4A is an expanded view of a portion of FIG. 4.
FIG. 5 is a perspective view of an exemplary membrane described herein.
FIG. 5A is an expanded view of a portion of FIG. 5.
FIG. 6 is a perspective view of an exemplary membrane described herein.
FIG. 6A is an expanded view of a portion of FIG. 6.

### Detailed Description

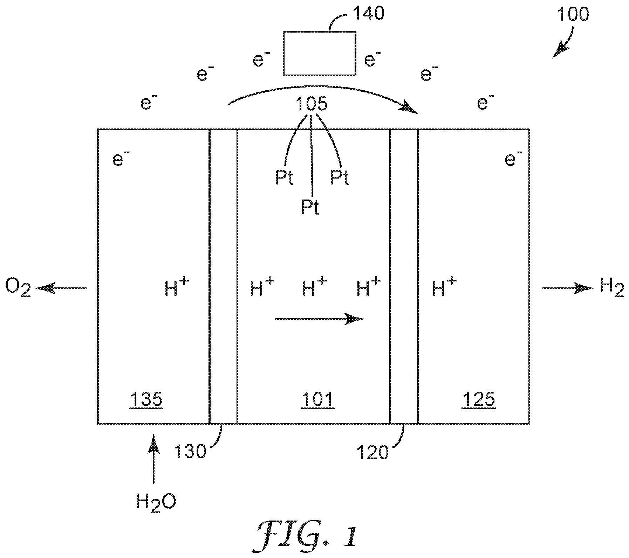

Referring to FIG. 1, exemplary water electrolyzer cell 100 comprising membrane 101, cathode 120, and anode 130. Membrane 100 comprises platinum 105, in the form of at least one of metallic Pt or Pt oxide. Platinum 105 may be supported platinum. As shown, cell 100 also includes optional first fluid transport layer (FTL) 135 adjacent anode 130, and optional second fluid transport layer 125 situated adjacent cathode 120. FTLs 125 and 135 can be referred to as diffuser/current collectors (DCCs) or gas diffusion layers (GDLs). In operation, water is introduced into the anode portion of cell 100, passing through first fluid transport layer 135 and over anode 130. Power source 140 applies an electrical current source on cell 100.

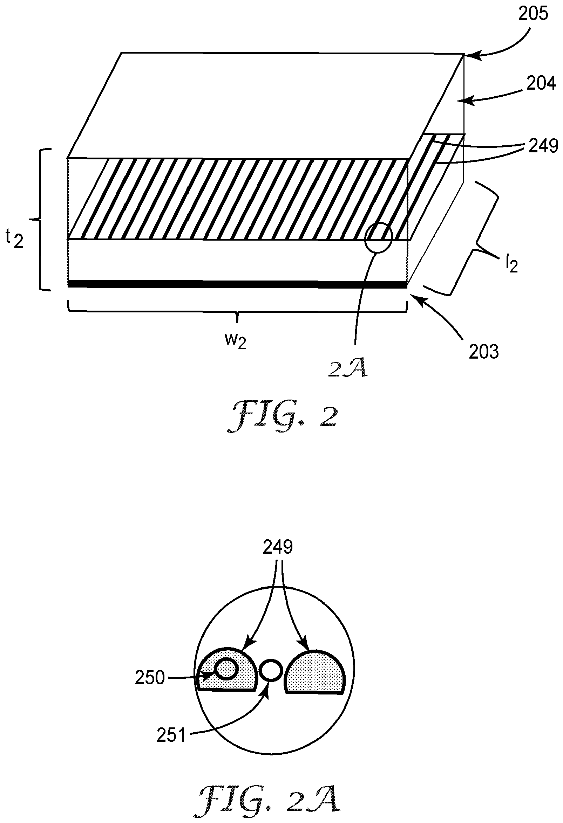

Referring to FIGS. 2 and 2A, exemplary membrane described herein 204 and anode 203 and cathode 205 is shown in FIG. 2. Membrane 204 has length l₂, thickness t₂, and width w₂ with at least one of metallic Pt or Pt oxide 249 in periodic concentrations across width w₂. Platinum 249 may be supported platinum. There is a plurality of alternating first and second regions 250, 251 across width w₂. First region 250 has a first concentration within a 100 micrometer³ volume collectively of metallic Pt and Pt oxide 249 that is at least 0.1 microgram/cm³. Second region 251 has a second concentration within a 100 micrometer³ volume collectively of metallic Pt and Pt oxide that is not greater than 0.01 microgram/cm³. The first concentration is at least 10 times greater than the second concentration.

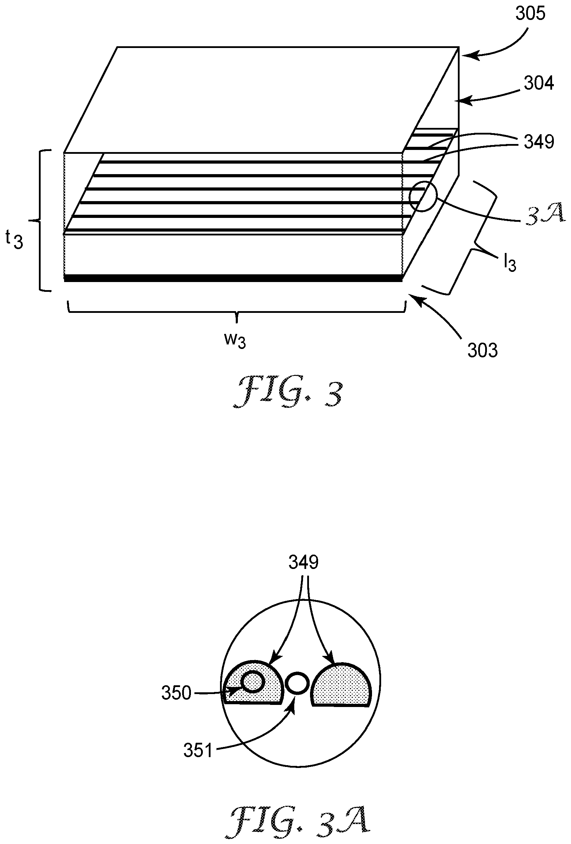

Referring to FIGS. 3 and 3A, exemplary membrane described herein 304 and anode 303 and cathode 305 is shown in FIG. 3. Membrane 304 has length l₃, thickness t₃, and width w₃ with at least one of metallic Pt or Pt oxide 349 in periodic concentrations across length l₃. Platinum 349 may be supported platinum. There is a plurality of alternating first and second regions 350, 351 across length l₃. First region 350 has a first concentration within a 100 micrometer³ volume collectively of metallic Pt and Pt oxide 349 that is at least 0.1 microgram/cm³. Second region 351 has a second concentration within a 100 micrometer³ volume collectively of metallic Pt and Pt oxide that is not greater than 0.01 microgram/cm³. The first concentration is at least 10 times greater than the second concentration.

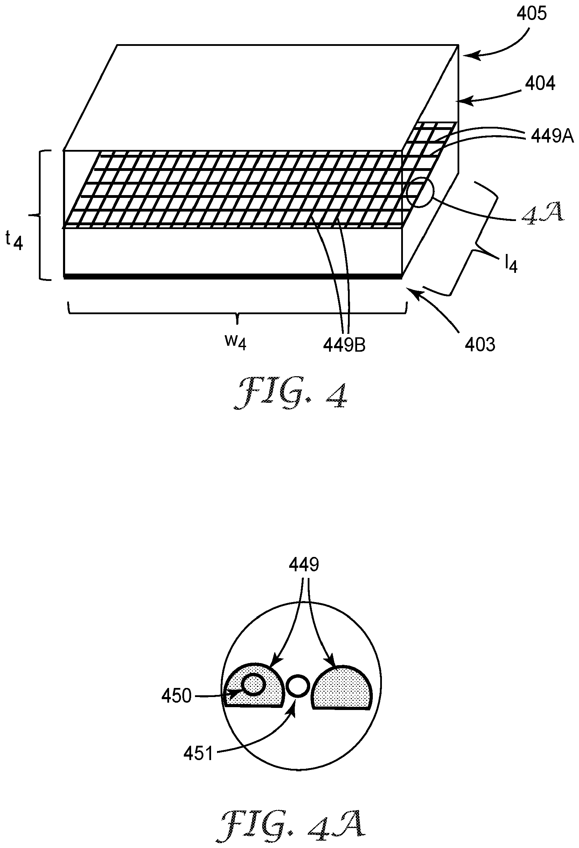

Referring to FIGS. 4 and 4A, exemplary membrane described herein 404 and anode 403 and cathode 405 is shown in FIG. 4. Membrane 404 has length l₄, thickness t₄, and width w₄ with at least one of metallic Pt or Pt oxide 449A and 449B in periodic concentrations across each of length l₄ and width w₄, respectively. Platinum 449A and 449B may be supported platinum. There is a plurality of alternating first and second regions 450, 451 across length l₄ (and not shown but also across width w₄). Respective first regions each have a first concentration within a 100 micrometer³ volume collectively of metallic Pt and Pt oxide that is at least 0.1 microgram/cm³. Respective second regions have a second concentration within a 100 micrometer³ volume collectively of metallic Pt and Pt oxide that is not greater than 0.01 microgram/cm³. The first concentration is at least 10 times greater than the respective second concentration.

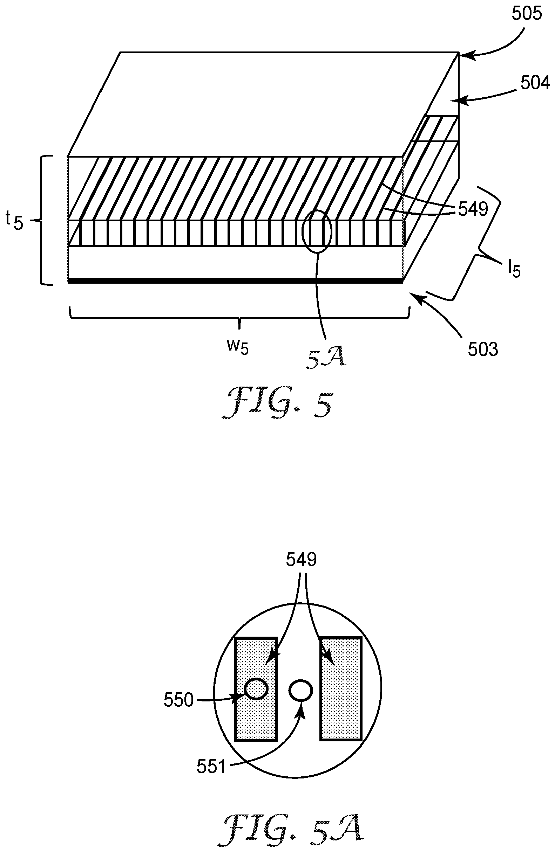

Referring to FIGS. 5 and 5A, exemplary membrane described herein 504 and anode 503 and cathode 505 is shown in FIG. 5. Membrane 504 has length l₅, thickness t₅, and width w₅ with at least one of metallic Pt or Pt oxide 549 in periodic concentrations across width w₅. Platinum 549 may be supported platinum. There is a plurality of alternating first and second regions 550, 551 across width w₅. First region 550 has a first concentration within a 100 micrometer³ volume collectively of metallic Pt and Pt oxide 549 that is at least 0.1 microgram/cm³. Second region 551 has a second concentration within a 100 micrometer³ volume collectively of metallic Pt and Pt oxide that is not greater than 0.01 microgram/cm³. The first concentration is at least 10 times greater than the second concentration.

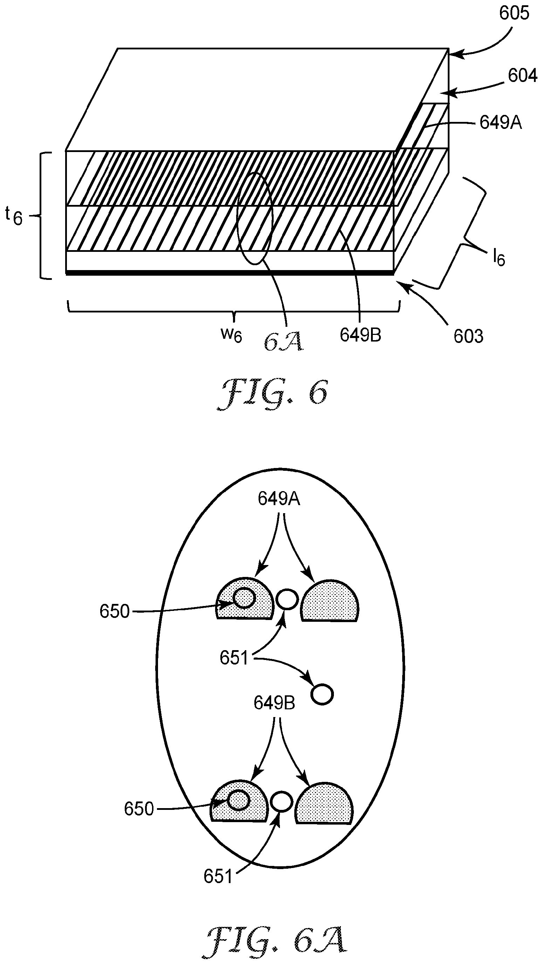

Referring to FIGS. 6 and 6A, exemplary membrane described herein 604 and anode 603 and cathode 205 is shown in FIG. 6. Membrane 604 has length l₆, thickness t₆, and width w₆ with at least one of metallic Pt or Pt oxide 649A and 649B in periodic concentrations across width we. Platinum 649A and 649B may be supported platinum. There is a plurality of alternating first and second regions across width w₆ for each of 649A and 649B at least one of metallic Pt or Pt oxide. Respective first region has a first concentration within a 100 micrometer³ volume collectively of metallic Pt and Pt oxide that is at least 0.1 microgram/cm³. Respective second regions have a second concentration within a 100 micrometer³ volume collectively of metallic Pt and Pt oxide that is not greater than 0.01 microgram/cm³. The first concentration is at least 10 times greater than the respective second concentration.

In some embodiments, membrane 204, 304, 404, 504, 604 is a proton exchange membrane (PEM) that preferentially permits hydrogen ions (solvated protons) to pass through the membrane to the cathode portion of the cell, thus conducting an electrical current through the membrane. Oxygen gas is collected at the anode of the cell via the first fluid transport layer situated adjacent the anode. Hydrogen ions (H⁺), electrons, and O₂ gas are produced at the anode via the electrochemical oxidation of water. The electrons cannot normally pass through the membrane and, instead, flow through an external electrical circuit in the form of electrical current.

The hydrogen ions (H⁺) combine with the electrons at the cathode to form hydrogen gas, and the hydrogen gas is collected through the second fluid transport layer situated adjacent the cathode.

Some of the produced hydrogen gas transports through the membrane from the cathode to the anode by diffusion, resulting in undesired "hydrogen crossover." Depending upon the application, the hydrogen may be desirably produced at an elevated pressure (e.g., 3 MPa), and the oxygen may be produced at a relatively lower pressure (e.g., 0.1 MPa). The elevated hydrogen pressure increases the hydrogen concentration at the cathode, increasing the hydrogen diffusion rate from the cathode, through the membrane, to the anode.

Hydrogen crossover is undesirable because the hydrogen which crosses over from the cathode to the anode results in loss of the hydrogen, decreasing the operational efficiency of the electrolyzer. Additionally, if the hydrogen crossover rate is sufficiently high relative to the oxygen production rate, the concentration of hydrogen in oxygen within the anode compartment of the electrolyzer may approach or exceed the lower flammability limit, 4 vol. % H₂. Both the efficiency loss and the flammability hazard place undesirable limits on the electrolyzer design and operation, which increases the electrolyzer system capital cost and the electrolyzer efficiency.

An ion conducting membrane used in a CCM or MEA described herein may comprise any suitable polymer electrolyte. Exemplary polymer electrolytes typically bear anionic functional groups bound to a common backbone, which are typically sulfonic acid groups but may also include carboxylic acid groups, imide groups, imide acid groups, amide groups, or other acidic functional groups. Anion conducting membranes comprising cationic functional groups bound to a common backbone are also possible but are less commonly used. Exemplary polymer electrolytes are typically highly fluorinated and most typically perfluorinated (e.g., at least one of perfluorosulfonic acid and perfluorosulfonimide acid). Exemplary electrolytes include copolymers of tetrafluoroethylene and at least one fluorinated, acid-functional co-monomer. Typical polymer electrolytes include those available from DuPont Chemicals, Wilmington, DE, under the trade designation "NATION;" Solvay, Brussels, Belgium, under the trade designation "AQUIVION;" and from Asahi Glass Co. Ltd., Tokyo, Japan, under the trade designation "FLEMION." The polymer electrolyte may be a copolymer of tetrafluoroethylene (TFE) and FSO₂-CF₂CF₂CF₂CF₂-O-CF=CF₂, described in U.S. Pat. Nos. 6,624,328 (Guerra) and 7,348,088 (Hamrock et al.), and U.S. Pub. No. 2004/0116742 (Guerra). The polymer typically has an equivalent weight (EW) up to 1200 (in some embodiments, up to 1100, 1000, 900, 825, 800, 725, or even up to 625).

The polymer can be formed into a membrane by any suitable method. The polymer is typically cast from a suspension. Any suitable casting method may be used, including bar coating, spray coating, slit coating, and brush coating. Alternately, the membrane may be formed from neat polymer in a melt process such as extrusion. After forming, the membrane may be annealed, typically at a temperature of at least 120°C (in some embodiments, at least 130°C, 150°C, or higher). The membrane typically has a thickness up to 250 micrometers (in some embodiments, up to 225 micrometers, 200 micrometers, 175 micrometers, 150 micrometers, 100 micrometers, or even up to 50 micrometers).

The membrane can be in any suitable shape for use within an electrolyzer. The shape of the membrane is defined by the shape of a plane perpendicular to the membrane thickness which extends to all intersecting edges of the membrane, and may be, for example, a regular or irregular polygon with 3 or more sides, a circle, an ellipse, an oval, or combinations thereof.

The polymer membrane can also include a support matrix consisting of a porous network of interlinked fibers that will provide the ion exchange polymer (ionomer) with additional mechanical strength to withstand the sometimes-large pressure differentials across the membrane due to the high pressure of the cathode side during hydrogen evolution. The support matrix can be made of an expanded polytetrafluoroethylene (e.g., that available under the trade designation "TEFLON" from DuPont Chemicals, Wilmington, DE), or a partially fluorinated fibrous matrix that will be stable in the acidic environment of the ionomer.

In some embodiments, the membrane has a first proton conducting polymer reinforced with a nanofiber mat; wherein the nanofiber mat is made from a nanofiber comprising a fiber material selected from polymers and polymer blends; wherein the fiber material has a fiber material proton conductivity; wherein the first proton conducting polymer has a first proton conducting polymer conductivity; and wherein the fiber material proton conductivity is less than the first proton conducting polymer conductivity.

In some embodiments, the fiber material in the membrane may include highly fluorinated polymer, perfluorinated polymer, hydrocarbon polymer, or blends and combinations thereof. In some embodiments, the fiber material in the membrane may include a polymer suitable for electrospinning selected from the group consisting of polyvinylidene fluoride (PVDF), polysulfone (PSU), poly(ethersulfone) (PES), polyethylenimine (PEI), polybenzimidazole (PBI), polyphenylene oxide (PPO), polyether ether ketone (PEEK), polyphenylene ether sulfone (PPES), poly ether ketone (PEK), blends, and combinations thereof. In some embodiments, the fiber material in the membrane may be an electrospun nanofiber.

Typically, it is desirable that the membrane be free of any Ce or Mn (i.e., no greater than 0.001 mg/cm³ of either Ce or MN, calculated as elemental Ce and Mn, respectively).

Additional details for exemplary membranes can be found, for example, in U.S. Pat. Pub. Nos. 2008/0113242, 2002/0100725, and 2011/036935.

Optionally, the membrane is washed in acid (e.g., 1.0 molar nitric acid to remove any metal cation impurities, or nitric acid plus hydrogen peroxide to remove metal cation impurities and organic impurities, followed by rinsing in deionized water) prior to deposition or lamination of catalyst (including catalyst-bearing nanostructured whiskers) to remove cation impurities. Heating the washing bath (e.g., to 30°C, 40°C, 50°C, 60°C, 70°C, or even 80°C) may make the cleaning faster. Benefits of acid washing the membrane may depend on the particular membrane.

In making an MEA, GDLs may be applied to either side of a CCM. The GDLs may be applied by any suitable means. Suitable GDLs include those stable at the electrode potentials of use. For example, the cathode GDL can contain particulate carbon black or carbon fibers since it is operated at low potentials sufficient for adequate hydrogen evolution, whereas the anode GDL is typically made of Ti or some other material stable at the high potentials characteristic of oxygen evolution. Typically, the cathode GDL is a carbon fiber construction of woven or non-woven carbon fibers. Exemplary carbon fiber constructions include those available, for example, under the trade designation "TORAY" (carbon paper) from Toray, Japan; "SPECTRACARB" (carbon paper) from Spectracarb, Lawrence, MA; and "ZOLTEK" (carbon cloth) from Zoltek, St. Louis, MO, as well as from Mitsubishi Rayon Co., Japan, and Freudenberg, Germany. The GDL may be coated or impregnated with various materials, including carbon particle coatings, hydrophilizing treatments, and hydrophobizing treatments such as coating with polytetrafluoroethylene (PTFE).

Typically, the electrolyzer anode GDL is metal foam or porous metal screen or mesh comprised, for example, of Pt, Ti, Ta, Nb, Zr, Hf, or a metal alloy that will not corrode (e.g., Ti-10V-5Zr) and yet will have adequate electrical conductivity (e.g., by sputter deposition or electroplating a layer of Pt onto the surface in the case of a Ti GDL) for the electrolyzer operation at the potentials of use above the thermodynamic potential for water oxidation at 1.23 V.

In use, MEAs described herein are typically sandwiched between two rigid plates, known as distribution plates, also known as end plates (or in case of a multi-cell stack, bipolar plates (BPPs)). Like the GDL, the distribution plates are electrically conductive and must be stable at the potentials of the electrode GDL against which it is placed. The distribution plate is typically made of materials such as carbon composite, metal, or coated or plated metals. As for the GDLs, the cathode plate of the electrolyzer can be any material common to use in fuel cells, whereas the anode plate of the electrolyzer must be fabricated of a material that will not corrode above potentials of 1.23 volt (in some embodiments, up to 1.5 volt, 2.5 volts, or even higher) relative to the potential of a reversible hydrogen electrode (RHE). An exemplary coating for the anode plate comprises Ti-10V-5Zr. The distribution plate distributes reactant or product fluids to and from the MEA electrode surfaces, typically through at least one fluid-conducting channel engraved, milled, molded, or stamped in the surface(s) facing the MEA(s). These channels are sometimes designated a flow field. The distribution plate may distribute fluids to and from two consecutive MEAs in a stack, with one face directing water to and oxygen from the anode of the first MEA while the other face directs evolved hydrogen and water (that crosses over the membrane) away from the cathode of the next MEA. Alternately, the distribution plate may have channels on one side only, to distribute fluids to or from an MEA on only that side, in which case the distribution plate may be termed an "end plate."

Pt (i.e., at least one of metallic or Pt oxide) is typically incorporated into the membrane via addition of the Pt containing salts to the membrane (imbibing), followed by chemical reduction typically using NaBH₄ or H₂. Supported Pt can also be incorporated into the membrane via addition of the supported Pt, which has been pre-wetted with deionized water, to the liquid suspension of the ionomer, followed by casting a membrane from the resultant mixture, as reported in PCT Pat. Pub. Nos. WO 2018/185615 (Lewinski et al.), WO 2018/185616 (Lewinski et al.), and WO 2018/185617 (Lewinski et al.). Although not wanting to be bound by theory, it is believed that the Pt incorporated into the membrane facilitates chemical recombination of hydrogen, which diffuses to the Pt within the membrane from the cathode, with oxygen, which diffuses to the Pt within the membrane from the anode, to produce water.

In some embodiments, any metallic Pt or Pt oxide present in the membrane is completely imbedded within the membrane. In some embodiments, at least 10 (in some embodiments, at least 20, 30, 40, 50, 60, 70, 80, 90, 95, or even at least 99) percent by weight of the at least one of metallic Pt or Pt oxide present in the membrane has an electronic resistivity between the platinum and the anode electrode of at least 100 (in some embodiments, at least 200, 500, 1,000, 10,000, 100,000 or even at least 1,000,000) ohm-cm. In some embodiments, at least 10 (in some embodiments, at least 20, 30, 40, 50, 60, 70, 80, 90, 95, or even at least 99) weight % of the at least one of metallic Pt or Pt oxide present in the membrane is in a 0 oxidation (metallic) state. Although not wanting to be bound by theory, it is believed that the platinum within the platinum-bearing layer of the hydrogen crossover mitigation membrane is more effective for the chemical recombination of crossover hydrogen and oxygen when the platinum is in the metallic state (i.e., 0 oxidation state) than when the platinum is in an oxidized state (e.g., +2 or +4 oxidation states corresponding to PtO or PtO₂). Although not wanting to be bound by theory, it is believed at least some of the platinum within the membrane may become oxidized if it is electronically connected to the anode electrode (i.e., if the electronic resistivity between the anode and the Pt is sufficiently low). Although not wanting to be bound by theory, it is believed that the electronic resistivity within a region which comprises ionomer and platinum increases as the platinum concentration decreases. During water electrolysis operation, the anode electrode potential exceeds 1.23 V vs. the standard hydrogen electrode. The standard oxidation potential of Pt⁰ to Pt⁺² is about 1.20 V vs. the standard hydrogen electrode. Although not wanting to be bound by theory, it is believed that membranes with alternating first and second regions are advantageous because more of the platinum present may be in the metallic oxidation state, as Pt-rich first regions with relatively lower electronic resistivity are isolated from each other, and the cell anode, by relatively higher resistivity Pt-deficient second regions. Additionally, due to the relative electronic isolation imparted by the second regions, we believe membranes with alternating first and second may allow for higher Pt concentration in the first regions than the Pt concentration in a membrane where the Pt is uniformly distributed, which may allow for improved efficacy towards chemical recombination of hydrogen and oxygen.

In some embodiments, a method for forming the alternating first and second regions comprises pattern coating a suspension comprising Pt and ionomer onto a substrate. In some embodiments, pattern coating comprises coating a layer of the suspension using a Meyer rod. In some embodiments, pattern coating comprises spray coating an incomplete layer of the suspension. In some embodiments, the substrate is a liner. In some embodiments, the substrate is a membrane. In some embodiments, a method for forming alternating first and second regions comprises repeating pattern coating of the Pt-containing suspension and membrane coating multiple times. In some embodiments, the at least one of metallic Pt or Pt oxide is collectively present in the second region of the membrane at a concentration in a range from 0.05 mg/cm³ to 100 mg/cm³ (in some embodiments, in a range from 0.1 mg/cm³ to 100 mg/cm³, 1 mg/cm³ to 75 mg/cm³, or even 5 mg/cm³ to 50 mg/cm³).

In some embodiments, at least a portion of the at least one of metallic Pt or Pt oxide in the membrane is present on a support (e.g., a carbon support). Carbon supports include at least one of carbon spheres or carbon particles (in some embodiments, having an aspect ratio in a range from 1:1 to 2:1, or even 1:1 to 5:1). Exemplary carbon spheres are available, for example, from Cabot Corporation, Billerica, MA, under the trade designations "VULCAN XC72" and "BLACK PEARLS BP2000." Exemplary carbon supports already coated with Pt catalysts are available, for example, from Tanaka Kikinzoku Kogyo K. K., Hiratsuka, Kanagawa, Japan, under the trade designations "TEC10F50E," "TEC10BA50E," "TEC10EA50E," "TEC10VA50E," "TEC10EA20E-HT," and "TEC10VA20E."

Carbon supports also include at least one of carbon nanotubes (e.g., single wall carbon nanotubes (SWNT) (sometimes referred to as "buckytubes"), double walled carbon nanotubes (DWNT), or multiple wall carbon nanotubes (MWNT)). Carbon nanotubes are available, for example, from Showa Denko Carbon Sales, Inc., Ridgeville, SC, under the trade designation "VGCF-H."

Carbon supports include carbon fullerenes (sometimes referred to as "buckyballs"). Carbon fullerenes are available, for example, from Frontier Carbon Corporation, Chiyoda-ku, Tokyo, Japan, under the trade designation "NANOM."

Carbon supports include at least one of carbon nanofibers or carbon microfibers. Carbon nanofibers and carbon microfibers are available, for example, from Pyrograf Products, Inc., Cedarville, OH, under the trade designation "PYROGRAF-III."

In some embodiments, the supports include nanostructured whiskers (e.g., perylene red whiskers). Nanostructured whiskers can be provided by techniques known in the art, including those described in U.S. Pat. Nos. 4,812,352 (Debe), 5,039,561 (Debe), 5,338,430 (Parsonage et al.), 6,136,412 (Spiewak et al.), and 7,419,741 (Vernstrom et al.). In general, nanostructured whiskers can be provided, for example, by vacuum depositing (e.g., by sublimation) a layer of organic or inorganic material such as perylene red onto a substrate (e.g., a microstructured catalyst transfer polymer), and then converting the perylene red pigment into nanostructured whiskers by thermal annealing. Typically, the vacuum deposition steps are carried out at total pressures at or below about 0.133322 Pa or 0.1 Pa. Exemplary microstructures are made by thermal sublimation and vacuum annealing of the organic pigment "perylene red," C.I. Pigment Red 149 (i.e., N,N'-di(3,5-xylyl)perylene-3,4:9,10-bis(dicarboximide)). Methods for making organic nanostructured layers are disclosed, for example, in Materials Science and Engineering, A158 (1992), pp. 1-6; J. Vac. Sci. Technol. A, 5 (4), July/August, 1987, pp. 1914-16; J. Vac. Sci. Technol. A, 6, (3), May/August, 1988, pp. 1907-11; Thin Solid Films, 186, 1990, pp. 327-47; J. Mat. Sci., 25, 1990, pp. 5257-68; Rapidly Quenched Metals, Proc. of the Fifth Int. Conf. on Rapidly Quenched Metals, Wurzburg, Germany (Sep. 3-7, 1984), S. Steeb et al., eds., Elsevier Science Publishers B.V., New York, (1985), pp. 1117-24; Photo. Sci. and Eng., 24, (4), July/August, 1980, pp. 211-16; and U.S. Pat. Nos. 4,340,276 (Maffitt et al.) and 4,568,598 (Bilkadi et al.). Properties of catalyst layers using carbon nanotube arrays are disclosed in the article "High Dispersion and Electrocatalytic Properties of Platinum on Well-Aligned Carbon Nanotube Arrays," Carbon, 42, (2004), 191-197. Properties of catalyst layers using grassy or bristled silicon are disclosed in U.S. Pat. Pub. No. 2004/0048466 A1 (Gore et al.).

Vacuum deposition may be carried out in any suitable apparatus (see, e.g., U.S. Pat. Nos. 5,338,430 (Parsonage et al.), 5,879,827 (Debe et al.), 5,879,828 (Debe et al.), 6,040,077 (Debe et al.), and 6,319,293 (Debe et al.), and U.S. Pat. Pub. No. 2002/0004453 A1 (Haugen et al.)). One exemplary apparatus is depicted schematically in FIG. 4A of U.S. Pat. No. 5,338,430 (Parsonage et al.), and discussed in the accompanying text, wherein the substrate is mounted on a drum that is then rotated over a sublimation or evaporation source for depositing the organic precursor (e.g., perylene red pigment) in order to form the nanostructured whiskers.

Typically, the nominal thickness of deposited perylene red pigment is in a range from about 50 nm to 500 nm. Typically, the whiskers have an average cross-sectional dimension in a range from 20 nm to 60 nm and an average length in a range from 0.3 micrometer to 3 micrometers.

In some embodiments, the whiskers are attached to a backing. Exemplary backings comprise polyimide, nylon, metal foils, or other material that can withstand the thermal annealing temperature up to 300°C. In some embodiments, the backing has an average thickness in a range from 25 micrometers to 125 micrometers.

In some embodiments, the backing has a microstructure on at least one of its surfaces. In some embodiments, the microstructure is comprised of substantially uniformly shaped and sized features at least three (in some embodiments, at least four, five, ten or more) times the average size of the nanostructured whiskers. The shapes of the microstructures can, for example, be V-shaped grooves and peaks (see, e.g., U.S. Pat. No. 6,136,412 (Spiewak et al.)) or pyramids (see, e.g., U.S. Pat. No. 7,901,829 (Debe et al.)). In some embodiments, some fraction of the features of the microstructures extend above the average or majority of the microstructured peaks in a periodic fashion, such as every 31^{st} V-groove peak is 25% or 50% or even 100% taller than those on either side of it. In some embodiments, this fraction of features that extend above the majority of the microstructured peaks can be up to 10% (in some embodiments, up to 3%, 2%, or even up to 1%). Use of the occasional taller microstructure features may facilitate protecting the uniformly smaller microstructure peaks when the coated substrate moves over the surfaces of rollers in a roll-to-roll coating operation. The occasional taller feature touches the surface of the roller rather than the peaks of the smaller microstructures and so much less of the nanostructured material or whiskers is likely to be scraped or otherwise disturbed as the substrate moves through the coating process.

In some embodiments, the supports include tin oxide. Such tin oxide is available as already catalyzed Pt/SnO₂ in form of finely ground particles for example, from Tanaka Kikinzoku Kogyo K. K., Hiratsuka, Kanagawa, Japan, under the trade designation "TEC10(SnO₂/A)10E" and "TEC10(SnO₂/A)30E."

In some embodiments, the supports include clay. These clays can take the form of particles or platelets and may be synthetic or naturally occurring layered silicates. Such clay is available, for example, from BYK Additives and Instruments, GmbH, Wesel, Germany, under the trade designation "LAPONITE RD."

Platinum can be sputtered onto the support, for example, using the general teachings in U.S. Pat. Nos. 5,879,827 (Debe et al.), 6,040,077 (Debe et al.), and 7,419,741 (Vernstrom et al.), and U.S. Pat. Pub. No. 2014/0246304 A1 (Debe et al.). In some embodiments, sputtering is conducted at least in part in an atmosphere comprising argon that is flowing into the sputtering chamber at a rate of at least 2 cm³/s.

In some embodiments, platinized whiskers are removed from the substrate, forming a catalyst powder. In some embodiments, methods for forming catalyst powder include thermocompression and solidification, as disclosed in U.S. Pat. Pub. No. 2011/0262828 A1 (Noda et al.).

The anode and cathode can be provided by techniques known in the art, including those described in PCT Pub. No. WO 2016/191057 A1, published December 1, 2016 . In general, the anode and cathode are each comprised of layers.

In some embodiments, the cathode comprises a first catalyst comprising at least one of metallic Pt or Pt oxide. In some embodiments, the first catalyst further comprises at least one of metallic Ir or Ir oxide. In some embodiments, the anode comprises a second catalyst comprising at least one of metallic Ir or Ir oxide. In some embodiments, the anode comprises at least 95 (in some embodiments, at least 96, 97, 98, or even at least 99) percent by weight of collectively metallic Ir and Ir oxide, calculated as elemental Ir, based on the total weight of the second catalyst (understood not to include any support, if any), wherein at least one of metallic Ir or Ir oxide is present.

Typically, the planar equivalent thickness of a catalyst layer is in a range from 0.5 nm to 500 nm. "Planar equivalent thickness" means, in regard to a layer distributed on a surface, which may be distributed unevenly, and which surface may be an uneven surface (such as a layer of snow distributed across a landscape, or a layer of atoms distributed in a process of vacuum deposition), a thickness calculated on the assumption that the total mass of the layer was spread evenly over a plane covering the same projected area as the surface (noting that the projected area covered by the surface is less than or equal to the total surface area of the surface, once uneven features and convolutions are ignored).

In some embodiments, the anode catalyst comprises up to 1 mg/cm² (in some embodiments, up to 0.25 mg/cm², or even up to 0.025 mg/cm²) of the at least one of metallic Ir or Ir oxide, calculated as elemental Ir. In some embodiments, the cathode catalyst comprises up to 1 mg/cm² (in some embodiments, up to 0.25 mg/cm², or even up to 0.025 mg/cm²) of the at least one of metallic Pt or Pt oxide, calculated as elemental Pt. Typically, the catalyst is a continuous layer on each whisker and may form a bridge to adjacent whiskers.

In some embodiments where catalyst is coated on nanostructured whiskers (including perylene red nanostructured whiskers), the catalyst is coated in-line, in a vacuum, immediately following the nanostructured whisker growth step on the microstructured substrate. This may be a more cost-effective process so that the nanostructured whisker coated substrate does not need to be re-inserted into the vacuum for catalyst coating at another time or place. If the Ir catalyst coating is done with a single target, it may be desirable that the coating layer be applied in a single step onto the nanostructured whiskers so that the heat of condensation of the catalyst coating heats the Ir, O, etc. atoms and substrate surface sufficiently to provide enough surface mobility that the atoms are well mixed and form thermodynamically stable domains. If the Pt catalyst coating is done with a single target, it may be desirable that the coating layer be applied in a single step onto the nanostructured whiskers so that the heat of condensation of the catalyst coating heats the Pt, O, etc. atoms and substrate surface sufficiently to provide enough surface mobility that the atoms are well mixed and form thermodynamically stable domains. Alternatively, for perylene red nanostructured whiskers, the substrate can also be provided hot or heated to facilitate this atomic mobility, such as by having the nanostructured whisker coated substrate exit the perylene red annealing oven immediately prior to the catalyst sputter deposition step.

It will be understood by one skilled in the art that the crystalline and morphological structure of a catalyst described herein, including the presence, absence, or size of alloys, amorphous zones, crystalline zones of one or a variety of structural types, and the like, may be highly dependent upon process and manufacturing conditions, particularly when three or more elements are combined.

Further, catalysts described herein are useful for providing membrane electrode assemblies. "Membrane electrode assembly" refers to a structure comprising a membrane that includes an electrolyte, typically a solid polymer electrolyte, and at least one but more typically two or more electrodes adjoining the membrane.

In some embodiments, the second catalyst consists essentially of at least one of metallic Ir or Ir oxide (i.e., consists essentially of metallic Ir, consists essentially of Ir oxide, or consists essentially of both metallic Ir and Ir oxide). In some embodiments, the second catalyst comprises at least one of metallic Ir or Ir oxide. In some embodiments, the second catalyst further comprises at least one of metallic Pt or Pt oxide. In some embodiments, the second catalyst consists essentially of at least one of metallic Pt or Pt oxide and at least one of metallic Ir or Ir oxide.

For catalysts comprising or consisting essentially of at least one of metallic Ir or Ir oxide and at least one of metallic Pt or Pt oxide, the iridium and platinum, calculated as elemental Ir and Pt, respectively, have a collective weight ratio of at least 20:1 (in some embodiments, at least 50:1, 100:1, 500:1, 1000:1, 5,000:1, or even at least 10,000:1; in some embodiments, in a range from 20:1 to 10,000:1, 20:1 to 5,000:1, 20:1 to 1,000:1, 20:1 to 500:1, 20:1 to 100:1, or even 20:1 to 50:1) Ir to Pt.

In some embodiments, the at least one of metallic Ir or Ir oxide of the second catalyst collectively has an areal density of at least 0.01 mg/cm² (in some embodiments, at least 0.05 mg/cm², 0.1 mg/cm², 0.25 mg/cm², 0.5 mg/cm², 1 mg/cm², or even at least 5 mg/cm²; in some embodiments, in a range from 0.01 mg/cm² to 5 mg/cm², 0.05 mg/cm² to 2.5 mg/cm², 0.1 mg/cm² to 1 mg/cm², or even 0.25 mg/cm² to 0.75 mg/cm²).

Water electrolyzers described herein are useful for generating hydrogen and oxygen from water, wherein water is in contact with the anode, and an electrical current is provided through the membrane with sufficient potential difference across the membrane to convert at least a portion of the water to hydrogen and oxygen on the cathode and anode, respectively.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### EXAMPLES

### Comparative Example A

Nanostructured whiskers employed as catalyst supports were made according to the process described in U.S. Pat. Nos. 5,338,430 (Parsonage et al.), 4,812,352 (Debe), and 5,039,561 (Debe), using as substrates the microstructured catalyst transfer substrates (or MCTS) described in U.S. Pat. No. 6,136,412 (Spiewak et al.). Perylene red pigment (i.e., N,N'-di(3,5-xylyl)perylene-3,4:9,10-bis(dicarboximide)) (C.I. Pigment Red 149, also known as "PR149", obtained from Clariant, Charlotte, NC) was sublimation vacuum coated onto MCTS with a nominal thickness of 200 nm, after which it was annealed. After deposition and annealing, highly oriented crystal structures were formed with large aspect ratios, controllable lengths of about 0.5 to 2-micrometers, widths of about 0.03-0.05 micrometer and areal number density of about 30 whiskers per square micrometer, oriented substantially normal to the underlying substrate.

Nanostructured thin film (NSTF) Ir-based catalyst (500Ir-NSTF) was prepared by sputter coating Ir catalyst films onto the layer of nanostructured whiskers. Nanostructured thin film (NSTF) catalyst layers were prepared by sputter coating catalyst films using a DC-magnetron sputtering process onto the layer of nanostructured whiskers. A roll-good of nanostructured whiskers on MCTS substrate were loaded into a vacuum sputter deposition system similar to that described in FIG. 4A of U.S. Pat. No. 5,338,430 (Parsonage et al.) but equipped with additional capability to allow coatings on roll-good substrate webs. The coatings were sputter deposited by using ultra high purity Ar as the sputtering gas at approximately 0.666 Pa pressure. Ir-NSTF catalyst layers were deposited onto the roll-good by first exposing all sections of the roll-good substrate to an energized 5-inch x 15-inch (13 cm x 38 cm) planar Ir sputtering target (obtained from Materion, Clifton, NJ), resulting in the deposition of Ir onto the substrate. The magnetron sputtering target deposition rate and web speed were controlled to give the desired areal loading of Ir on the substrate. The DC magnetron sputtering target deposition rate and web speed were measured by standard methods known to those skilled in the art. The substrate was repeatedly exposed to the energized Ir sputtering target, resulting in additional deposition of Ir onto the substrate, until the desired Ir areal loading was obtained, 500 micrograms of Ir per cm².

Nanostructured thin film 250Pt-NSTF catalyst was prepared as described for 500Ir-NSTF, above, but a pure 5-inch x 15-inch (13 cm x 38 cm) planar Pt sputter target (obtained from Materion) was used in place of Ir, and the desired Pt areal loading was 250 micrograms of Pt per cm².

A catalyst-coated-membrane (CCM) was made by transferring the 500Ir-NSTF and 250Pt-NSTF catalyst-coated whiskers described above onto either surface of the proton exchange membrane (PEM) ("NAFION 117") using the lamination process, reported in detail, in U.S. Pat. No. 5,879,827 (Debe et al.). The membrane thickness was measured to be 183 micrometers (similar to the specification thickness of 177.8 micrometers), listed in Table 1 below, and the membrane did not contain Pt, also noted in Table 1, below.

**Table 1**

| Sample | CCM Thickness, micrometers | Volumetric Pt Loading in Layer, micrograms/cm³ | Areal Pt Loading in Membrane, mg/cm² | H₂ concentration in O₂, mole % in O₂ |
|---|---|---|---|---|
| Comparative Example A | 183 | 0 | 0 | 0.52 |
| Comparative Example B | 100 | 0 | 0 | 0.82 |
| Comparative Example C | 125 | 0 | 0 | 0.62 |
| Comparative Example D | 143 | 21,312 | 0.092 | 0.003 |
| Example 1 | 101-108 | 74,120 | 0.057 | 0.02 |
| Example 2 | 101-108 | 86,189 | 0.066 | Not available |

The 250Pt-NSTF catalyst layer was laminated to one side (intended to become the cathode side) of the PEM, and the Ir-NSTF catalyst layer was laminated to the other (anode) side of the PEM. The catalyst transfer was accomplished by hot roll lamination of the NSTF catalysts onto the PEM: the hot roll temperatures were 350°F (177°C) and the gas line pressure fed to force laminator rolls together at the nip ranged from 150 psi to180 psi (1.03 MPa to 1.24 MPa). The catalyst coated MCTSs were precut into 13.5 cm x 13.5 cm square shapes and sandwiched onto one or both side(s) of a larger square of PEM. The PEM with catalyst coated MCTS on one or both side(s), was placed between 2 mil (51 micrometer) thick polyimide film and then placed, paper on the outside, prior to passing the stacked assembly through the nip of the hot roll laminator at a speed of 1.2 ft./min. (37 cm/min.). Immediately after passing through the nip, while the assembly was still warm, the layers of polyimide and paper were quickly removed and the Cr-coated MCTS substrates were peeled off the CCM by hand, leaving the catalyst coated whiskers stuck to the PEM surface(s).

The CCM was installed with appropriate gas diffusion layers directly into a 50 cm² active area test cell (obtained under the trade designation "50SCH" from Fuel Cell Technologies, Albuquerque, NM), with quad serpentine flow fields. The normal graphite flow field block on the anode side was replaced with a Pt plated Ti flow field block of the same dimensions and flow field design (obtained from Giner, Inc., Auburndale, MA) to withstand the high anode potentials during electrolyzer operation. Purified water with a resistivity of 18 MΩ was supplied to the anode at 75 mL/min. A potentiostat (obtained under the trade designation "VMP-3, Model VMP-3" from Bio-Logic Science Instruments SAS, Seyssinet-Pariset, France) coupled with a 100A/5V booster (obtained as VMP 300 from Bio-Logic Science Instruments SAS) was connected to the cell and was used to control the applied cell voltage or current density. The output of the cell anode was passed through a chilled heat exchanger and liquid separatory system to condense out and remove moisture, after which the dry effluent gas was sampled by a gas chromatograph (obtained under the trade designation "MICRO490," Model 490 Micro GC from Agilent, Santa Clara, CA) for analysis of the output gas for hydrogen concentration in oxygen.

The cell was operated with a temperature of 80°C with deionized water (18 MΩ-cm) flowing at a rate of 75 mL/min to the anode, with the anode and cathode outlets held near ambient pressure (101 kPa). Using the potentiostat, the cell current density was held fixed at 2 A/cm², during which the anode gas effluent was characterized for hydrogen concentration in oxygen. Once the cell voltage and hydrogen concentration in the anode effluent had stabilized, the current density was stepwise decreased to a lower current density and held until the voltage and hydrogen concentration in oxygen stabilized. This process was repeated until a current density of 0.05 A/cm² was reached, and the current density was held until the voltage and hydrogen concentration in oxygen stabilized. The concentration of H₂ in the anode effluent stream at 0.05 A/cm² was 0.52 mole % hydrogen in oxygen, summarized in Table 1, above.

### Comparative Example B

Comparative Example B was prepared and characterized as described for Comparative Example A, except that a membrane obtained under the trade designation "3M PFSA 825EW" from 3M Company, St. Paul MN, 100 micrometers thick, was used instead of the "NAFION 117" membrane. The membrane was prepared by first casting two 50 micrometer thick membranes with ionomer obtained under the trade designation "825 EW PFSA IONOMER" from 3M Company, prepared as described at col. 3, lines 37-67 through col. 4, lines 1-24 of U.S. Pat. No. 7,348,088 (Hamrock et al.). The two 50 micrometer-thick membranes ("825EW PFSA") were laminated together by heated nip-roll lamination analogous to the lamination procedure as described in Comparative Example A for fabricating the CCM. The two-layer membrane was fabricated into a CCM and characterized, as described for Comparative Example A. The measured hydrogen concentration in the anode effluent stream at 0.05 A/cm² was 0.82 mole % in oxygen, listed in Table 1, above.

### Comparative Example C

Comparative Example C was prepared and characterized as described for Comparative Example B, except that membrane ("3M 825EW PFSA"), 125 micrometers thick, was used instead of the 100 micrometer-thick membrane ("3M 825EW PFSA"). The membrane was prepared by laminating two layers of 50 micrometer-thick membrane ("825EW PFSA") and one layer of solution cast 25 micrometer-thick membrane ("825EW PFSA") by heated nip-roll lamination analogous to the lamination procedure for described for fabricating the CCM. The measured hydrogen concentration in the anode effluent stream at 0.05 A/cm² was 0.62 mole % in oxygen, listed in Table 1, above.

### Comparative Example D

Comparative Example D was prepared and characterized as described for Comparative Example C, except that the 25 micrometer-thick membrane ("825EW PFSA") was replaced with a 43 micrometer-thick membrane (prepared as described below) containing platinum supported on whiskers which were uniformly distributed throughout the 25 micrometer-thick membrane.

Nanostructured thin film 50Pt-NSTF catalyst was prepared as described for 250Pt-NSTF, above, with the desired Pt areal loading of 50 micrograms of Pt per cm². The areal loading of the whisker support was approximately 20 micrograms per cm², and the calculated Pt wt.% of the supported 50Pt-NSTF catalyst was 71.4 wt.% Pt. Catalyst powder was removed from the MCTS with a brush and collected.

A 9 wt.% suspension of the supported platinum catalyst was prepared by stirring 0.9 gram of the 50Pt-NSTF catalyst into 9 grams of deionized water, with continued stirring overnight. 1.62 gram of the 9 wt.% suspension of the supported platinum catalyst and 28.83 grams of 34 wt.% perfluorosulfonic acid ion exchange resin solution were mixed together and the composite mixture slowly stirred at 100 RPM overnight to obtain a homogeneous mixture.

The resulting mixture was then immediately used to cast a membrane. A 5 inch (12.7 cm) wide microfilm applicator (obtained from Paul N. Gardner Company, Inc., Pompano Beach, FL) was used to coat the composite mixture onto a 2 mil (51 micrometer) thick polyimide film (obtained under the trade designation "KAPTON HN" from E. I. du Pont de Nemours, Wilmington, DE) with a wet film thickness of 15 mils (0.38 millimeter) which was uniform across the 5-inch (12.7 cm) width of the coating. The coated sample was dried at 70°C for 15 minutes and then at 120°C for 30 minutes, followed by annealing at 160°C for 10 minutes. The annealed sample was then cooled down to room temperature.

The dried membrane thickness was measured as 43 micrometers thick. The membrane was uniformly opaque across the length and width of the membrane, indicative that the supported platinum catalyst was uniformly distributed along the length and width of the membrane.

Based on the suspension formulation information, material densities, and measured thickness above, the dried membrane was calculated to contain 21,312 micrograms of Pt per cm³ of membrane, and the areal Pt loading within the dried membrane was calculated as 0.092 mg/cm², listed in Table 1, above.

The resulting 43 micrometer-thick, Pt-containing membrane was laminated between two 50 micrometer-thick membranes ("3M825EW PFS A"), with a laminator temperature of 350°F (177°C), an applied pressure of 150 psi (1.03 MPa), and a roller speed of 0.5 feet per minute (15.24 cm per minute). The resulting 143 micrometer thick membrane was incorporated into a CCM as described for Comparative Example C, and was characterized for hydrogen crossover as described for Comparative Example C. The measured hydrogen concentration in the anode effluent stream at 0.05 A/cm² was 0.003 mole % in oxygen, listed in Table 1, above.

### Example 1

Example 1 was prepared and characterized as described for Comparative Example D, except that the supported Pt and ionomer suspension formulation was as described below, and the coating method used to coat the suspension containing Pt-NSTF and ionomer was as described below.

0.215 gram of 50Pt-NSTF was stirred with 2.15 grams of DI water for 1 hour. Next, 12 grams of 34 wt.% PFSA solution in alcohol/water solvent mixture was added to the whisker dispersion. The resulting mixture was stirred using a magnetic stirrer at 100 RPM overnight at room temperature.

A laboratory coating Meyer rod, 16" x 0.5", wire #20 (obtained from RD Specialties, Inc., Webster, NY) was used to coat the Pt-NSTF, ionomer, and solvent mixture directly onto a glass plate, resulting in an approximately 50 micrometer wet coating. The coating was dried in the oven at 70°C for 15 minutes and then at 120°C for 30 minutes, and then annealed at 160°C for 10 minutes. Annealed samples were then cooled down to room temperature. The measured thickness of the film was 7.62 micrometers. The dried film consisted of alternating transparent and opaque regions across the film width, likely due to variations in Pt concentration across the film width.

Based on the suspension formulation information, material densities, and measured thickness above, the dried membrane was calculated to contain 74,120 micrograms of Pt per cm³ of membrane, and the areal Pt loading within the dried membrane was calculated as 0.057 mg/cm², listed in Table 1, above.

The edges of the dried film were affixed to the glass plate using tape ("3M POLYIMIDE FILM TAPE 5413" from 3M Company). A layer of 34 wt.% ionomer was coated onto the top of the dried film, using a 127 mm wide microfilm applicator (obtained from Paul N. Gardner Company, Inc.). The wet thickness of coating was calculated to produce a membrane of approximately 50 micrometers in thickness when dry. The two-layer coating was dried at 70°C for 15 minutes and then at 120°C for 30 minutes, followed by annealing at 160°C for 10 minutes, resulting in a two-layer membrane, with one layer consisting of PFSA ionomer only and the second layer contained supported Pt catalyst and ionomer with a variation in Pt loading across the width.

The two-layer membrane was then removed from the glass plate, and a 50-micrometer thick PFSA membrane was laminated to the side of the two-layer membrane which consisted of the supported Pt catalyst and ionomer, at 177°C, 1.034 MPa, and 2.54 mm/s. The thickness of the resultant three-layer membrane ranged from 101 to 108 micrometers.

The resulting three-layer membrane was incorporated into a CCM as described for Comparative Example D, and was characterized for hydrogen crossover as described for Comparative Example D. The measured hydrogen concentration in the anode effluent stream at 0.05 A/cm² was 0.02 mole % in oxygen, listed in Table 1, above.

### Example 2

Example 2 was prepared as described for Example 1, except that the supported platinum used within the membrane was different as described below. Nanostructured thin film 100Pt-NSTF catalyst was prepared as described for 50Pt-NSTF, above, with the desired Pt areal loading of 100 micrograms of Pt per cm². The areal loading of the whisker support was approximately 20 micrograms per cm², and the calculated Pt wt.% of the supported 100Pt-NSTF catalyst was 83.3 wt.% Pt. 0.215 gram of 100Pt-NSTF were stirred with 2.15 grams of deionized water for 1 hour. Next, 12 grams of 34 wt.% PFSA solution in alcohol/water solvent mixture was added to the whisker dispersion. The resulting mixture was stirred using a magnetic stirrer at 100 RPM overnight at room temperature. The mixture was utilized to fabricate a three-layer membrane, as described for Example 1, above. Based on the suspension formulation information, material densities, and measured thickness above, the dried membrane was calculated to contain 86,689 micrograms of Pt per cm³ of membrane, and the areal Pt loading within the dried membrane was calculated as 0.066 mg/cm², listed in Table 1, above.

The resulting three-layer membrane was incorporated into a CCM as described for Example 1. During characterization, a testing error prevented determination of the hydrogen crossover of Example 2.

Foreseeable modifications and alterations of this disclosure will be apparent to those skilled in the art without departing from the scope of this invention. This invention should not be restricted to the embodiments that are set forth in this application for illustrative purposes.

## Claims

1. A water electrolyzer comprising:
a membrane having first and second opposed major surfaces, a thickness extending between the first and second major surfaces;
a cathode comprising a first catalyst on the first major surface of the membrane; and
an anode comprising a second catalyst on the second major surface of the membrane,
wherein the membrane, if planar, has a length direction, an average length, a width direction, an average width, a thickness direction, and an average thickness,
wherein the average length and the average width are each greater than the average thickness,
wherein the average width is no greater than the average length,
wherein the average thickness is defined between first and second major surfaces of the membrane,
wherein the average length, the average width, and the average thickness define a membrane volume,
wherein the length direction, the width direction, and the thickness direction are each perpendicular to each other,
wherein the membrane volume comprises at least one of metallic Pt or Pt oxide,
wherein the membrane volume comprises at least 5 of alternating first and second regions across at least one plane in the membrane,
wherein the first region has a first concentration within a 100 micrometer³-volume collectively of metallic Pt and Pt oxide that is at least 0.1 microgram/cm³,
wherein the second region has a second concentration within a 100 micrometer³-volume collectively of metallic Pt and Pt oxide that is not greater than 0.01 microgram/cm³, and
wherein the first concentration is at least 10 times greater than the second concentration.

2. The water electrolyzer of claim 1, wherein, the alternating first and second regions are across at least one line in at least one of the length direction, the width direction, or the thickness direction.

3. The water electrolyzer of claim 1, wherein the alternating first and second regions are across at least one of (a) at least one plane parallel with the length and width directions, (b) at least one plane parallel with the length and thickness directions, or (c) at least one plane parallel with the width and thickness directions.

4. The water electrolyzer of claim 1, wherein the alternating first and second regions are across at least one volume within the length, width, and thickness directions.

5. The water electrolyzer of any preceding claim, wherein the alternating first and second regions collectively provide a half sinusoidal concentration pattern.

6. The water electrolyzer of claims 1 to 4, wherein the alternating first and second regions collectively provide a sinusoidal concentration pattern.

7. The water electrolyzer of claims 1 to 4, wherein the alternating first and second regions collectively provide a triangular concentration pattern.

8. The water electrolyzer of any preceding claim, wherein the first catalyst comprises at least one of metallic Pt or Pt oxide.

9. The water electrolyzer of any preceding claim, wherein the second catalyst comprises at least 95 percent by weight of collectively metallic Ir and Ir oxide, calculated as elemental Ir, based on the total weight of the second catalyst, wherein at least one of metallic Ir or Ir oxide is present.

10. The water electrolyzer of claim 9, wherein the second catalyst further comprises at least one of metallic Pt or Pt oxide.

11. The water electrolyzer of claim 10, wherein the at least one of metallic Ir or Ir oxide and at least one of metallic Pt or Pt oxide collectively has, calculated as elemental Ir and Pt, respectively, a weight ratio of at least 20:1 Ir to Pt.

12. The water electrolyzer of claims 9-11, wherein the at least one of metallic Ir or Ir oxide of the second catalyst has an areal density of at least 0.01 mg/cm².

13. The water electrolyzer of any preceding claim, wherein the membrane further comprises polymer electrolyte.

14. The water electrolyzer of any preceding claim, wherein the at least one of metallic Pt or Pt oxide is collectively present in the membrane at a concentration in a range from 0.05 mg/cm³ to 100 mg/cm³.

15. A method of generating hydrogen and oxygen from water, the method comprising:
providing a water electrolyzer of any preceding claim;
providing water in contact with the anode; and
providing an electrical potential difference across the membrane with sufficient current to convert at least a portion of the water to hydrogen and oxygen on the cathode and anode, respectively.

## Patentansprüche

1. Ein Wasserelektrolyseur, umfassend:
eine Membran mit erster und zweiter gegenüberliegenden Hauptoberfläche, wobei sich eine Dicke zwischen der ersten und zweiten Hauptoberfläche erstreckt;
eine Kathode, umfassend einen ersten Katalysator, auf der ersten Hauptoberfläche der Membran; und
eine Anode, umfassend einen zweiten Katalysator, auf der zweiten Hauptoberfläche der Membran,
wobei die Membran, wenn planar, eine Längsrichtung, eine durchschnittliche Länge, eine Breitenrichtung, eine durchschnittliche Breite, eine Dickenrichtung und eine durchschnittliche Dicke aufweist,
wobei die durchschnittliche Länge und die durchschnittliche Breite jeweils größer als die durchschnittliche Dicke sind,
wobei die durchschnittliche Breite nicht größer als die durchschnittliche Länge ist,
wobei die durchschnittliche Dicke zwischen erster und zweiter Hauptoberfläche der Membran definiert ist,
wobei die durchschnittliche Länge, die durchschnittliche Breite und die durchschnittliche Dicke ein Membranvolumen definieren,
wobei die Längsrichtung, die Breitenrichtung und die Dickenrichtung jeweils senkrecht zueinander sind,
wobei das Membranvolumen mindestens eines von metallischem Pt oder Pt-Oxid umfasst,
wobei das Membranvolumen mindestens 5 von abwechselnden ersten und zweiten Bereichen quer durch mindestens eine Ebene in der Membran umfasst,
wobei der erste Bereich insgesamt eine erste Konzentration innerhalb eines 100-Mikrometer³-Volumens an metallischem Pt und Pt-Oxid aufweist, die mindestens 0.1 Mikrogramm/cm³ beträgt,
wobei der zweite Bereich insgesamt eine zweite Konzentration innerhalb eines 100-Mikrometer³-Volumens an metallischem Pt und Pt-Oxid aufweist, die nicht größer als 0.01 Mikrogramm/cm³ ist, und
wobei die erste Konzentration mindestens 10 Mal größer als die zweite Konzentration ist.

2. Der Wasserelektrolyseur nach Anspruch 1, wobei die abwechselnden ersten und zweiten Bereiche quer durch mindestens eine Linie in mindestens einer der Längsrichtung, der Breitenrichtung oder der Dickenrichtung vorliegen.

3. Der Wasserelektrolyseur nach Anspruch 1, wobei die abwechselnden ersten und zweiten Bereiche quer durch mindestens eines von (a) mindestens einer Ebene parallel zu der Längs- und Breitenrichtung, (b) mindestens einer Ebene parallel zu der Längs- und Dickenrichtung oder (c) mindestens eine Ebener parallel zu der Breiten- und Dickenrichtung vorliegen.

4. Der Wasserelektrolyseur nach Anspruch 1, wobei die abwechselnden ersten und zweiten Bereiche quer durch mindestens ein Volumen innerhalb der Längs-, Breiten- und Dickenrichtung vorliegen.

5. Der Wasserelektrolyseur nach einem der vorstehenden Ansprüche, wobei die abwechselnden ersten und zweiten Bereiche insgesamt ein halbsinusförmiges Konzentrationsmuster bereitstellen.

6. Der Wasserelektrolyseur nach Ansprüchen 1 bis 4, wobei die abwechselnden ersten und zweiten Bereiche insgesamt ein sinusförmiges Konzentrationsmuster bereitstellen.

7. Der Wasserelektrolyseur nach Ansprüchen 1 bis 4, wobei die abwechselnden ersten und zweiten Bereiche insgesamt ein dreiecksförmiges Konzentrationsmuster bereitstellen.

8. Der Wasserelektrolyseur nach einem der vorstehenden Ansprüche, wobei der erste Katalysator mindestens eines von metallischem Pt oder Pt-Oxid umfasst.

9. Der Wasserelektrolyseur nach einem der vorstehenden Ansprüche, wobei der zweite Katalysator basierend auf dem Gesamtgewicht des zweiten Katalysators insgesamt mindestens 95 Gewichtsprozent metallisches Ir und Ir-Oxid umfasst, berechnet als elementares Ir, wobei mindestens eines von metallischem Ir oder Ir-Oxid vorhanden ist.

10. Der Wasserelektrolyseur nach Anspruch 9, wobei der zweite Katalysator ferner mindestens eines von metallischem Pt oder Pt-Oxid umfasst.

11. Der Wasserelektrolyseur nach Anspruch 10, wobei das mindestens eines von metallischem Ir oder Ir-Oxid und mindestens eines von metallischem Pt oder Pt-Oxid insgesamt, jeweils als elementares Ir und Pt berechnet, ein Gewichtsverhältnis von mindestens 20: 1 Ir zu Pt aufweist.

12. Der Wasserelektrolyseur nach Ansprüchen 9-11, wobei das mindestens eine von metallischem Ir oder Ir-Oxid des zweiten Katalysators eine Flächendichte von mindestens 0.01 mg/cm² aufweist.

13. Der Wasserelektrolyseur nach einem der vorstehenden Ansprüche, wobei die Membran ferner Polymerelektrolyt umfasst.

14. Der Wasserelektrolyseur nach einem der vorstehenden Ansprüche, wobei das mindestens eine von metallischem Pt oder Pt-Oxid in der Membran insgesamt in einer Konzentration in einem Bereich von 0.05 mg/cm³ bis 100 mg/cm³ vorhanden ist.

15. Ein Verfahren zum Erzeugen von Wasserstoff und Sauerstoff aus Wasser, wobei das Verfahren umfasst: Bereitstellen eines Wasserelektrolyseurs nach einem der vorstehenden Ansprüche;
Bereitstellen von Wasser in Kontakt mit der Anode; und
Bereitstellen einer elektrischen Potentialdifferenz quer durch die Membran mit ausreichendem Strom, um jeweils an der Kathode und Anode mindestens einen Teils des Wassers in Wasserstoff und Sauerstoff umzuwandeln.

## Revendications

1. Électrolyseur d'eau comprenant:
une membrane ayant des première et deuxième surfaces principales opposées, une épaisseur s'étendant entre les première et deuxième surfaces principales;
une cathode comprenant un premier catalyseur sur la première surface principale de la membrane; et
une anode comprenant un deuxième catalyseur sur la deuxième surface principale de la membrane,
dans lequel la membrane, si elle est plane, a une direction de longueur, une longueur moyenne, une direction de largeur, une largeur moyenne, une direction d'épaisseur, et une épaisseur moyenne,
dans lequel la longueur moyenne et la largeur moyenne sont chacune supérieures à l'épaisseur moyenne,
dans lequel la largeur moyenne n'est pas supérieure à la longueur moyenne,
dans lequel l'épaisseur moyenne est définie entre les première et deuxième surfaces principales de la membrane,
dans lequel la longueur moyenne, la largeur moyenne, et l'épaisseur moyenne définissent un volume de membrane,
dans lequel la direction de longueur, la direction de largeur, et la direction d'épaisseur sont chacune perpendiculaires l'une à l'autre,
dans lequel le volume de membrane comprend au moins un parmi du Pt métallique ou de l'oxyde de Pt,
dans lequel le volume de membrane comprend au moins 5 des première et deuxième régions alternées à travers au moins un plan dans la membrane,
dans lequel la première région a une première concentration au sein d'un volume de 100 micromètres³ collectivement de Pt métallique et d'oxyde de Pt qui vaut au moins 0.1 microgramme/cm³,
dans lequel la deuxième région a une deuxième concentration au sein d'un volume de 100 micromètre³ collectivement de Pt métallique et d'oxyde de Pt qui n'est pas supérieure à 0.01 microgramme/cm³, et
dans lequel la première concentration est au moins 10 fois plus grande que la deuxième concentration.

2. Électrolyseur d'eau selon la revendication 1, dans lequel, les première et deuxième régions alternées sont à travers au moins une ligne dans au moins une de la direction de longueur, de la direction de largeur, ou de la direction d'épaisseur.

3. Électrolyseur d'eau selon la revendication 1, dans lequel les première et deuxième régions alternées sont à travers au moins un parmi (a) au moins un plan parallèle aux directions de longueur et de largeur, (b) au moins un plan parallèle aux directions de longueur et d'épaisseur, ou (c) au moins un plan parallèle aux directions de largeur et d'épaisseur.

4. Électrolyseur d'eau selon la revendication 1, dans lequel les première et deuxième régions alternées sont à travers au moins un volume au sein des directions de longueur, de largeur, et d'épaisseur.

5. Électrolyseur d'eau selon une quelconque revendication précédente, dans lequel les première et deuxième régions alternées fournissent collectivement un profil de concentration semi-sinusoïdal.

6. Électrolyseur d'eau selon les revendications 1 à 4, dans lequel les première et deuxième régions alternées fournissent collectivement un profil de concentration sinusoïdal.

7. Électrolyseur d'eau selon les revendications 1 à 4, dans lequel les première et deuxième régions alternées fournissent collectivement un profil de concentration triangulaire.

8. Électrolyseur d'eau selon une quelconque revendication précédente, dans lequel le premier catalyseur comprend au moins un parmi du Pt métallique ou de l'oxyde de Pt.

9. Électrolyseur d'eau selon une quelconque revendication précédente, dans lequel le deuxième catalyseur comprend au moins 95 pour cent en poids collectivement d'Ir métallique Ir et d'oxyde d'Ir, calculé en tant qu'lr élémentaire, sur la base du poids total du deuxième catalyseur, dans lequel au moins un parmi de l'Ir métallique ou de l'oxyde d'Ir est présent.

10. Électrolyseur d'eau selon la revendication 9, dans lequel le deuxième catalyseur comprend en outre au moins un parmi du Pt métallique ou de l'oxyde de Pt.

11. Électrolyseur d'eau selon la revendication 10, dans lequel l'au moins un parmi de l'Ir métallique ou de l'oxyde d'Ir et au moins un parmi du Pt métallique ou de l'oxyde de Pt collectivement ont, calculé en tant qu'Ir et Pt élémentaires, respectivement, un rapport pondéral d'au moins 20:1 de l'Ir au Pt.

12. Électrolyseur d'eau selon les revendications 9 à 11, dans lequel l'au moins un parmi l'Ir métallique ou l'oxyde d'Ir du deuxième catalyseur a une densité surfacique d'au moins 0.01 mg/cm².

13. Électrolyseur d'eau selon une quelconque revendication précédente, dans lequel la membrane comprend en outre un électrolyte polymère.

14. Électrolyseur d'eau selon une quelconque revendication précédente, dans lequel l'au moins un parmi le Pt métallique ou l'oxyde de Pt est collectivement présent dans la membrane à une concentration dans une plage allant de 0.05 mg/cm³ à 100 mg/cm³.

15. Procédé de génération d'hydrogène et d'oxygène à partir d'eau, le procédé comprenant: la fourniture d'un électrolyseur d'eau selon une quelconque revendication précédente;
la fourniture d'eau en contact avec l'anode; et
la fourniture d'une différence de potentiel électrique à travers la membrane avec un courant suffisant pour convertir au moins une partie de l'eau en hydrogène et en oxygène sur la cathode et l'anode, respectivement.
